# EUROPEAN PATENT APPLICATION

(11) **EP 1 710 810 A1**
(43) Date of publication of application: **11.10.2006**
(21) Application number: 06006694.1
(22) Date of filing: 30.03.2006
(51) Int. Cl.: G21C 3/352, G21C 3/356, G21C 3/322

(54) **Spacer grid with four point contact for supporting each individual fuel rod**

(30) Priority: 08.04.2005 US 101683
(71) Applicant: Westinghouse Electric Company LLC, Monroeville, PA 15146-2866 (US)
(72) Inventor: Marzean, Michael A., Columbia, South Carolina 29209 (US)
(74) Representative: Gallo, Wolfgang

(57) **Abstract**

A four point contact grid (50) for a nuclear fuel assembly (20), that is structured to engage at least one generally cylindrical fuel rod (28). The four point contact grid (50) includes a plurality (51) of elongated, generally flat straps (52) including a first set of straps (58) and a second set of straps (59), each strap (52) having a plurality of cell portions (60). The straps (52) are divided into a first set (58) and a second set (59). The first set (58) of straps is disposed in a spaced parallel relation to each other. The second set (59) of straps is also disposed in a space parallel relation to each other and are generally perpendicular to the first set of straps (58). The first set (58) of straps and second set (59) of straps are coupled to each other thereby forming a plurality of generally square cells (56). Each strap cell portion (60) has at least one protrusion (70, 72). Each the strap cell portion (60) further has only a single protrusion (70, 72) extending into each cell (56). Each the protrusion (70, 72) is either an elongated spring (78) or an elongated dimple (79). Thus, each the fuel rod (28) is contacted by only four protrusions (70, 72) in each cell (56).

## Description

### BACKGROUND OF THE INVENTION

### Field of the Invention

The present invention relates to nuclear reactor fuel assemblies and more particularly to an array for supporting fuel rods wherein the array consists of a plurality of straps disposed in a grid-like pattern of cells wherein each cell has four contact points structured to engage a fuel rod.

### Description of the Prior Art

In a typical pressurized water reactor (PWR), the reactor core is comprised of a large number of generally vertically, elongated fuel assemblies. The fuel assemblies include a frame assembly structured to support a plurality of fuel rods. The fuel assembly includes a top nozzle, a bottom nozzle, a plurality of spacer grids, intermediate flow mixing grids, and a plurality of thimble tubes. The grids are attached to the plurality of elongated thimble tubes which extend vertically between the top and bottom nozzles. The thimble tubes typically receive control rods, plugging devices, or instrumentation therein. A fuel rod includes a nuclear fuel typically clad in a cylindrical metal tube. Generally, water enters the fuel assembly through the bottom nozzle and passes vertically upward through the fuel assembly. As the water passes over the fuel rods, the water is heated until the water exits the top nozzle at a very elevated temperature.

The grids are used to position the fuel rods in the reactor core, resist fuel rod vibration, provide lateral support for the fuel rods and, to some extent, vertically restrain the fuel rods against longitudinal movement. The spacer grids are commonly positioned approximately 20 inches apart in the axial direction to provide mechanical support to the rods. A common problem in the PWR fuel industry is vibration of the fuel rod/support system as a natural response to coolant flow. This phenomenon is manifested as grid-to-rod fretting, which can ultimately lead to a breach in the fuel rod cladding and leakage of nuclear fuel material into the coolant. One type of conventional grid design includes a plurality of interleaved straps that together form an egg-crate configuration having a plurality of generally square cells which individually accept the fuel rods therein. Depending upon the configuration of the thimble tubes, the thimble tubes can either be received in cells that are sized the same as those that receive fuel rods therein, or can be received in relatively larger thimble cells defined in the interleaved straps.

The straps are generally flat, elongated members having a plurality of relatively compliant springs and relatively rigid dimples extending perpendicularly from either side of the flat member. Slots are utilized to effect an interlocking engagement with adjacent straps, thereby creating a grid of "vertical" and "horizontal" straps which form generally square cells. The location of the springs and dimples are configured such that each cell typically has a spring on each of two adjacent sides. On each of the sides of the cell opposite the springs there are, typically, two dimples. The springs must be disposed opposite the arches so that the fuel rod is biased against the dimples by the springs. The springs and dimples of each cell engage the respective fuel rod extending through the cell thereby supporting the fuel rod at six points (two springs and four dimples) in each cell. Preferably, each spring and/or dimple includes an arcuate, concave platform having a radius generally the same as a fuel rod. This concave platform helps distribute the radial load on the sides of the fuel rods. The perimeter straps have either springs or dimples extending from one side and peripherally enclose the inner straps of the grid to impart strength and rigidity to the grid. Another role of spacer grids is to produce turbulent mixing of the coolant passing through them. Mixing is induced by devices on the grids, for example, but not limited to, mixing vanes. The mixing imparted by the mixing devices enhances heat transfer from the fuel rods.

A "mixing" grid is disposed between the structural spacer grids in the upper spans. The mixing grids do not necessarily contact the fuel rods. Commonly called Intermediate Flow Mixing grids, these grids effectively reduce the free space between grids from 20 in. to approximately 10 in., thereby increasing the coolant mixing (hence, heat transfer) from the rods. The Intermediate Flow Mixing grids typically have four non-coplanar support arches, which are similar to dimples, sized to have a nominal clearance with the fuel rod when the fuel rod is new. That is, there are typically two arches in one plane and two arches in another plane.

The design of the prior art support grids and Intermediate Flow Mixing grids have several disadvantages. For example, because the support grids and Intermediate Flow Mixing grids have two different designs, individual parts must be made for each type of grid. A cost savings could be realized if the two types of grids utilized the same components. Also, the support grid includes six protuberances, that is six fuel rod contact elements, into the flowpath of the coolant. These protuberances create an undesirable pressure drop. Additionally, in the Intermediate Flow Mixing grids the two coplanar arches merely resist movement in two directions.

There is, therefore, a need for a support grid and Intermediate Flow Mixing grid that reduces the number of protuberances extending into the coolant flowpath.

There is a further need for a support grid and Intermediate Flow Mixing grid that are made from the same type of straps.

There is a further need for a support grid and Intermediate Flow Mixing grid that have an extended fuel rod contact surface thereby allowing for a lower contact pressure.

### SUMMARY OF THE INVENTION

These needs, and others, are met by the present invention which provides for a four contact point strap that may be used on either a support grid or Intermediate Flow Mixing grid and which has an elongated fuel rod contact surface. The straps are structured to form generally square cells. Within each cell are two elongated springs and two elongated dimples. The elongated springs and elongated dimples are non-coplanar within a cell. Thus, in each cell the fuel rod is contacted at four points. Because there are only four protuberances extending into each cell, instead of six as in the prior art, the pressure drop is reduced. This also allows for a reduced height support grid which in turn further reduces the pressure drop as the coolant contacts the support grid for a shorter distance. Additionally, because there are only four contact points, the number of points where fretting wear occurs is reduced. Further, because the springs and dimples are elongated, the contact pressure applied to the fuel rod may be reduced, thus further reducing fretting while still contacting the fuel rod with generally the same force as in the prior art support grids. A grid assembled with such straps may be used in place of either a support grid or Intermediate Flow Mixing grid.

As in the prior art, the straps are generally flat elongated members having a series of coupling grooves extending from either the top or bottom edge. The coupling grooves, as is known in the art, allow the straps to be joined to form a grid with the generally square cells. The portion of a strap disposed between two grooves forms part on an individual cell and is hereinafter identified as a "strap cell portion." That is, the strap includes a plurality of strap cell portions joined at their lateral edges. Each strap cell portion includes a first surface, a second surface located opposite the first surface, an upper portion and a lower portion. A protuberance extends from each upper portion and lower portion. The protuberance may be either an elongated spring or an elongated dimple. The protuberances on an upper and lower portion of a strap cell portion extend from opposite surfaces. That is, for example, if the upper portion protuberance extends from the first side, the lower portion protuberance extends from the second side. Preferably, there is one of each type of protuberance, *i*.*e*. one elongated spring and one elongated dimple, one each cell portion.

### BRIEF DESCRIPTION OF THE DRAWINGS

A further understanding of the invention can be gained from the following description of the preferred embodiments when read in conjunction with the accompanying drawings in which:
Figure I is an elevational view of a conventional nuclear fuel assembly.
Figure 2 is a top view of a support grid.
Figure 3 is an isometric view of a strap.
Figure 4 is an isometric view of a strap cell portion.
Figure 5 is a front view of a strap cell portion.
Figure 6 is a side view of a strap cell portion.

### DESCRIPTION OF THE PREFERRED EMBODIMENT

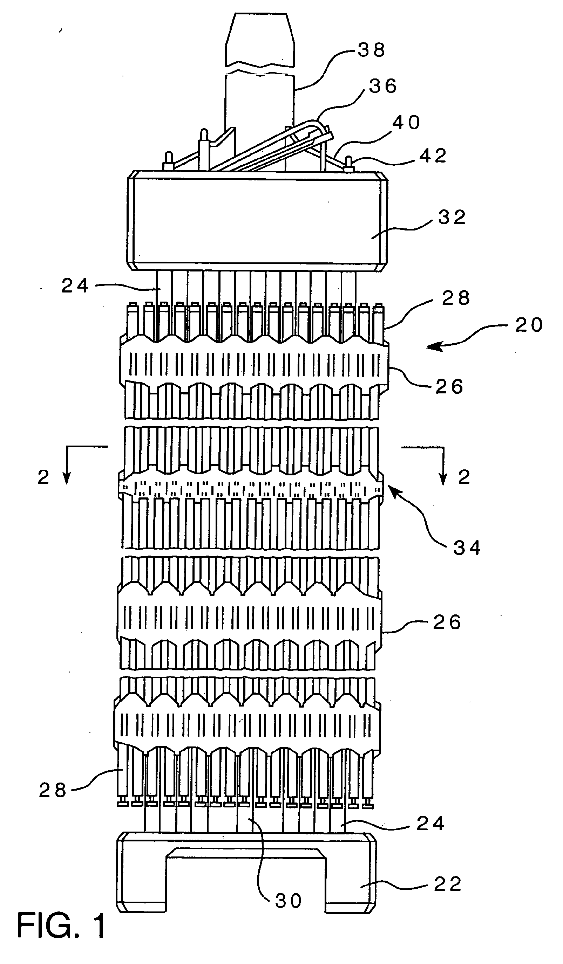

As shown in Figure 1, a fuel assembly 20 for a nuclear reactor is disposed in a water vessel (not shown) having an inlet at the bottom and an outlet at the top. The fuel assembly 20 comprises a lower end structure or bottom nozzle 22 for supporting the fuel assembly 20 on the lower core plate (not shown) in the core region of a reactor (not shown); a number of longitudinally extending control rod guide tubes, or thimbles 24, projecting upwardly from the bottom nozzle 22; a plurality of transverse support grids 26 axially spaced along the guide thimbles 24; an organized array of elongated fuel rods 28 transversely spaced and supported by the grids 26; an instrumentation tube 30 located in the center of the assembly; and an upper end structure or top nozzle 32 attached to the upper ends of the guide thimbles 24, in a conventional manner, to form an integral assembly capable of being conventionally handled without damaging the assembly components. The bottom nozzle 22 and the top nozzle 32 have end plates (not shown) with flow openings (not shown) for the upward longitudinal flow of a fluid coolant, such as water, to pass up and along the various fuel rods 28 to receive the thermal energy therefrom. To promote mixing of the coolant among the fuel rods 28, at least one mixing vane grid structure or Intermediate Flow Mixing grids 34 is disposed between a pair of support grids 26 and mounted on the guide thimbles 24.

The top nozzle 32 includes a transversely extending adapter plate (not shown) having upstanding sidewalls secured to the peripheral edges thereof in defining an enclosure or housing. An annular flange (not shown) is secured to the top of the sidewalls and suitably clamped to this flange are leaf springs 36 (only one of which being shown in Fig. 1) which cooperate with the upper core plate (not shown) in a conventional manner to prevent hydraulic lifting of the fuel assembly caused by upward coolant flow while allowing for changes in fuel assembly length due to core induced thermal expansion and the like. Disposed within the opening defined by the sidewalls of the top nozzle 32 is a conventional rod cluster control assembly 38 for vertically moving the control rods in the control rod guide thimbles 24 in a well-known manner. To form the fuel assembly 20, support grids 26 and an Intermediate Flow Mixing grid 34 are attached to the longitudinally extending guide thimbles 24 at predetermined axially spaced locations. The bottom nozzle 22 is suitably attached to the lower ends of the guide thimbles 24 and then the top nozzle 32 is attached to the upper ends of guide thimbles 24. Fuel rods 28 are then inserted through the grids 26 and Intermediate Flow Mixing grid 34. The fuel rods 28 are generally elongated cylinders having a diameter. For a more detailed description of the fuel assembly 20, reference should be made to U.S. Patent No. 4,061,536.

The fuel assembly 20 depicted in the drawings is of the type having a square array of fuel rods 28 with the control rod guide thimbles 24 being strategically arranged within the fuel rod array. Further, the bottom nozzle 22, the top nozzle 32, and likewise the support grids 26 are generally square in cross section. In that the specific fuel assembly 20 represented in the drawings is for illustrational purposes only, it is to be understood that neither the shape of the nozzles or the grids, or the number and configuration of the fuel rods 28 and guide thimbles 24 are to be limiting, and the invention is equally applicable to different shapes, configurations, and arrangements than the ones specifically shown.

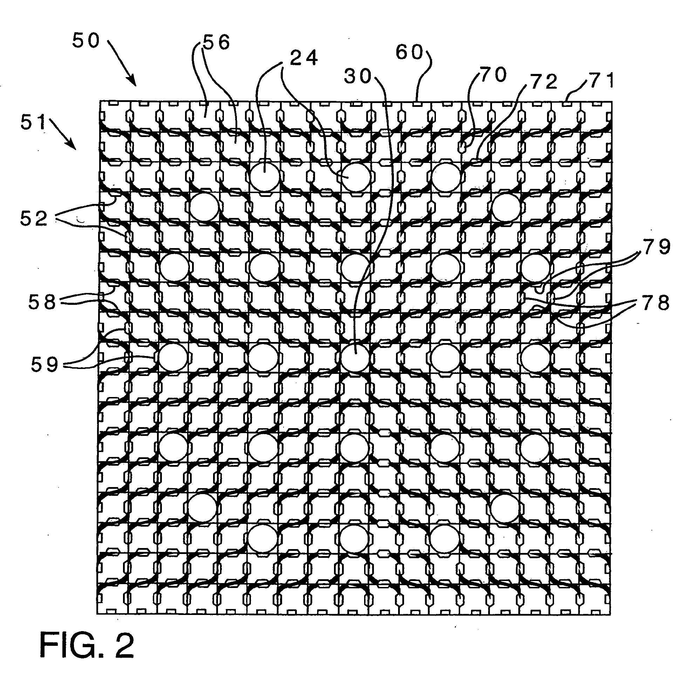

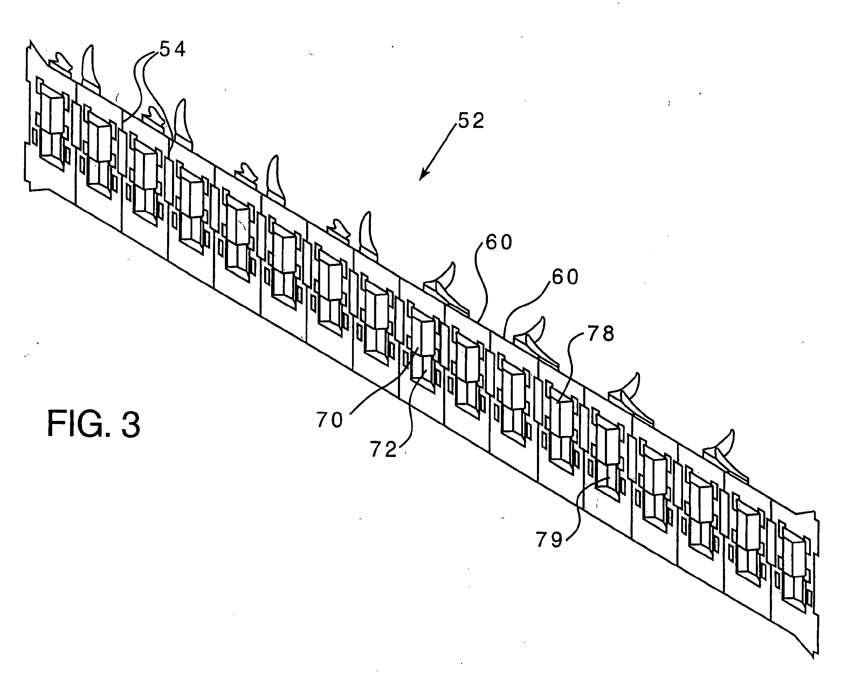

As shown in Figures 2 and 3, the support grids 26 and the Intermediate Flow Mixing grids 34 may be constructed in a substantially similar manner as a generally square, four point contact grid 50. The four point contact grid 50 is constructed from a plurality 51 of generally flat, elongated straps 52, such as the one shown in Figure 3. A strap 52 includes a plurality of coupling grooves 54 extending from either the upper edge or the lower edge. As is known in the art, the straps 52 having grooves 54 extending from the lower edge are disposed in a spaced parallel relation (Fig. 2). A first set 58 of straps 52 with the grooves 54 extending from the upper edge are disposed in a spaced parallel relation that is generally perpendicular to a second set 59 of straps 52 having grooves 54 extending from the lower edge. In this configuration, the grooves 54 on the first and second sets 58, 59 of straps 52 are structured to engage each other thereby forming the four point contact grid 50 with generally square cells 56. The area of the strap 52 between two grooves 54, or between a groove 54 and the end of the strap 52, may be identified as a strap cell portion 60.

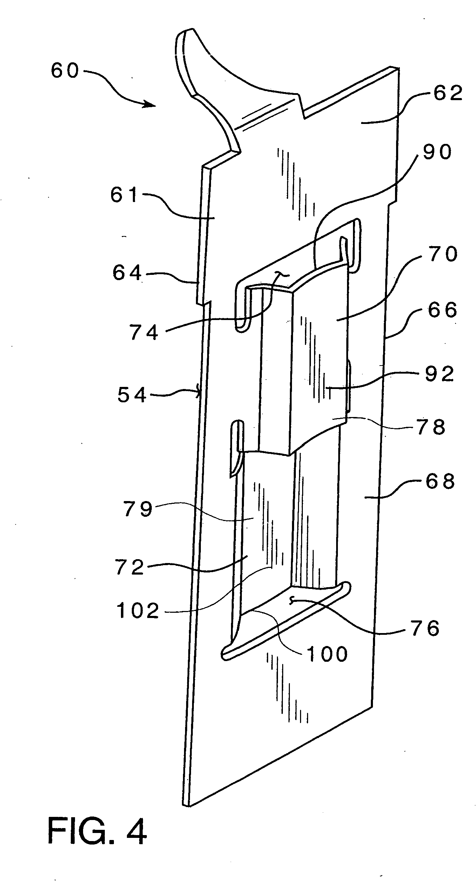

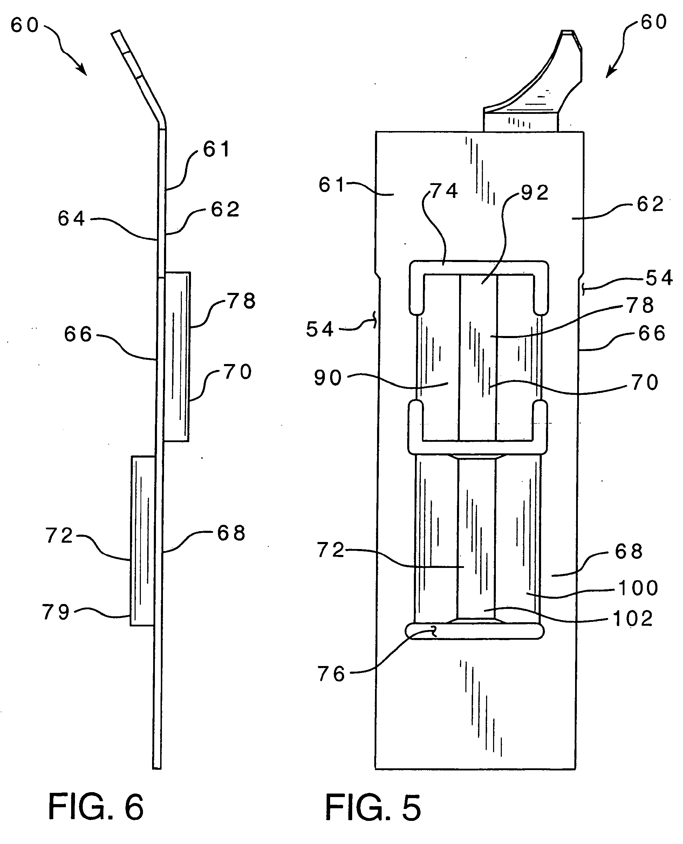

Each strap cell portion 60 is generally similar and a single strap cell portion 60 is shown in Figures 4-6. It is understood that the description of the single strap cell portion 60 is generally applicable to all strap cell portions 60. However, it is initially noted that, as described in detail below, the strap cell portion 60 shown in Figures 4-6 has an elongated spring 78 on the upper portion 66 and an elongated dimple 79 on the lower portion 68. The positions of the elongated spring 78 and the elongated dimple 79 may be reversed. The strap cell portions 60 include a body 61 having a first side 62, a second side 64 opposite the first side 62, an upper portion 66, and a lower portion 68. On either lateral edge of the strap cell portions 60 is a groove 54. As shown in Figures 4-6, the groove 54 begins at the bottom edge of the strap cell portions 60 and extends upwardly into the upper portion 66. As noted above, the groove 54 may also start at the upper edge of the strap cell portions 60 and extend into the lower portion 68. In the upper portion 66 there is a first protuberance 70 extending from the first side 62 and in the lower portion 68 there is a second protuberance 72 extending from the second side 64. It is noted that straps 52 used at the perimeter of the four point contact grid 50 do not have protuberances 70, 72 on the outer side but have at least one protuberance 71 extending inwardly. The protuberances 70, 72 are, preferably, punched from the body 61 thereby creating an upper opening 74 in the upper portion 66 and a lower opening 76 in the lower portion 68. The protuberances 70, 72 may be either an elongated spring 78 or an elongated dimple 79, described more fully below. As shown, the first protuberance 70 is disposed in the upper portion 66 of the strap cell portion 60 and the second protuberance 72 is disposed in the lower portion 68 of the strap cell portion 60. A mixing device 80, such as, but not limited to, a vane 82 may be disposed at the top edge of the strap cell portion 60.

The elongated spring 78 is a generally arcuate member 90 with a concave channel 92 at the vertex.. The arcuate member 90 is elongated in a vertical direction having a height of between about 0.2 and 0.5 inch, and more preferably about 0.3 inch. The spring channel 92 extends along the entire height of the arcuate member 90. The spring channel 92 has a width of between about 0.02 and 0.08 inch, and more preferably about 0.04 inch. The spring channel 92 has about the same curvature as a fuel rod 28 and is structured to engage the fuel rod 28. The upper opening 74 in which the elongated spring 78 is disposed includes vertical cutouts 94 extending partially along each lateral side of the elongated spring 78. Thus, the arcuate member 90 is not coupled to that body 61 along the entire lateral edge. The cutouts 94 allow the arcuate member 90 to flex relative to the body 61 creating a spring-like action. Thus, the elongated spring 78 is structured to apply a pressure of between about 0.0 and 2.5 psi, and more preferably about 0.8 psi.

The elongated dimple 79 is a generally arcuate member 100 with a concave channel 102 at the vertex. The dimple arcuate member 100 is elongated in a vertical direction having a height of between about 0.2 and 0.5 inch, and more preferably about 0.3 inch. The dimple channel 102 extends along the entire height of the dimple arcuate body 90. The dimple channel 102 has a width of between about 0.02 and 0.08 inch, and more preferably about 0.04 inch. The dimple channel 102 has about the same curvature as a fuel rod 28 and is structured to engage the fuel rod 28. Substantially, the entire length of the dimple arcuate member 100 lateral sides is coupled to the body 61. As such the dimple arcuate member 100 is only minimally flexible.

When the straps 52 are assembled into the four point contact grid 50 with generally square cells 56, each elongated spring 78 or elongated dimple 79 extends into a single cell. The elongated spring 78 and elongated dimple 79 on a single cell portion extend into adjacent cells. As there is only one protrusion 70, 72 extending from each strap cell portion 60 forming the generally square cell 56, there are only four contact points in each cell 56. Additionally, as noted above, all the protrusions 70, 72 in a cell 56 are coplanar. That is, all the protrusions 70, 72 in a single cell 56 are either on the upper portion 66 or the lower portion 68. The protrusions 70, 72 are structured so that an elongated spring 78 is disposed opposite an elongated dimple 79. In this configuration, each fuel rod 28 is engaged at four contact locations in each cell 56. That is, each fuel rod 28 is biased by two elongated springs 78 into two elongated dimples 79. The four-point contact grid 50 acts to prevent fuel rod 28 rotation and bowing in a manner similar to a six-point contact grid.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended and any and all equivalents thereof.

## Claims

1. A four point contact grid (50) for a nuclear fuel assembly (20), said fuel rod assembly (20) having at least one generally cylindrical fuel rod (28) with a diameter, said four point contact grid (50) comprising:
a plurality (51) of elongated, generally flat straps (52) including a first set of straps (58) and a second set of straps (59), each strap (52) having a plurality of cell portions (60);
said first set of straps (58) disposed in a spaced parallel relation to each other;
said second set of straps (59) disposed in a spaced parallel relation generally perpendicular to said first set of straps (58) and coupled to said first set of straps (58) thereby forming a plurality of generally square cells (56);
each strap cell portion (60) having at least one protrusion (70, 72);
each said strap cell portion (60) having only a single protrusion (70, 72) extending into each cell (56);
each said protrusion is (70, 72) either an elongated spring (78) or an elongated dimple (79); and
whereby each said fuel rod (28) is contacted by only four protrusions (70, 72) in each cell (56).

2. The four point contact grid (50) of claim 1 wherein each elongated spring (78) is disposed on the opposite side of said cell (56) form an elongated dimple (79).

3. The four point contact grid (50) of claim 1 or 2 wherein each elongated spring (78) is structured to apply a pressure of between about 0.0 psi and 2.5 psi to each fuel rod (28).

4. The four point contact grid (50) of any of claims 1 to 3 wherein each elongated spring (78) has a length of between about 0.2 and 0.5 inches.

5. The four point contact grid (50) of claim 4 wherein each elongated spring (78) has a length of about 0.3 inches.

6. The four point contact grid (50) of any of claims 1 to 5 wherein:
each elongated spring (78) includes a generally arcuate member (90, 100) having a concave channel (92, 102) at the vertex; and
said channel (92, 102) extending the height of said arcuate member (90, 100) and shaped to engage said fuel rod (28).

7. The four point contact grid (50) of any of claims 1 to 6 wherein each elongated dimple (79) has a length of between about 0.2 and 0.5 inches.

8. The four point contact grid (50) of claim 7 wherein each elongated dimple (79) has a length of about 0.3 inches.

9. The four point contact grid (50) of any of claims 1 to 8 wherein:
each elongated dimple (79) includes a generally arcuate member (90, 100) having a concave channel (92, 102) at the vertex; and
said channel (92, 102) extending the height of said arcuate member (90, 100) and shaped to engage said fuel rod (28).

10. A fuel assembly (20) for a nuclear reactor structured to enclose at least one fuel rod (28) with a diameter, said fuel assembly (20) comprising:
a bottom nozzle (22);
a plurality of elongated guide thimbles (24) projecting upwardly from said the bottom nozzle (22); and
a plurality of four point contact grids (50) according to any of claims 1 to 9 and being axially spaced along the guide thimbles (24) and wherein said four point contact grids (50) act as both support grids (26) and intermediate flow mixing grids (34).

11. The fuel assembly (20) for a nuclear reactor of claim 10 wherein each strap cell portion (60) includes a mixing device.
